# DEMANDE DE BREVET EUROPEEN

(11) **EP 1 127 490 A1**
(43) Date de publication de la demande: **29.08.2001**
(21) Numéro de dépôt: 01420052.1
(22) Date de dépôt: 23.02.2001
(51) Int. Cl.: A01N 1/00

(54) **Composition et fluide de conservation du corps humain ou animal contenant cette composition**

(30) Priorité: 25.02.2000 FR 0002408
(71) Demandeur: SARL "E.H.F.", 69940 Sarcey (FR)
(72) Inventeur: Clerc, M Paul, 30126 St Laurent des Arbres (FR); Sigoure, M. Jean, 69620 Le Bois d'Oingt (FR)
(74) Mandataire: Guerre, Dominique

(57) **Abrégé**

Une composition de l'invention contient au moins du glycérol, un sel soluble dans le glycérol, et un hydroalcoolat de propolis, à titre de principe actif. L'invention concerne aussi un fluide de conservation du corps humain ou animal contenant au moins une telle composition.

## Description

La présente invention relève du domaine de la conservation des cadavres humains ou animaux, par injection dans les artères d'un liquide de conservation.

La thanatopraxie, ou embaumement du corps mort, est une pratique réclamée par les familles des défunts, mais s'avère, dans certaines circonstances, être un acte obligatoire, comme par exemple dans les cas de déplacements internationaux des corps, de transports des corps avant crémation dans des cercueils à parois plus minces que ceux destinés à être enterrés, dans certains cas de réintégration du corps de personnes décédées dans un centre hospitalier, à leur domicile, et aussi dans certains cas de dépôt en caveau provisoire.

Généralement, cette opération qui dure entre une et deux heures consiste simultanément à injecter dans le cadavre un fluide de conservation, par voie intra-artérielle, et à aspirer les humeurs du corps. De nos jours, et depuis plusieurs dizaines d'années, l'embaumement est pratiqué au moyen de fluides de conservation à base de formol, qui présentent des propriétés conservatrices et diffusantes. Plus précisément, un fluide couramment utilisé comprend du formol, du glycérol et/ou du phénol, un sel soluble dans le glycérol ou le phénol tel qu'un borate, un sulfate, un nitrate de potassium et/ou d'aluminium, du méthanol, un colorant rouge et des essences végétales.

L'inconvénient majeur de cette pratique réside dans son caractère mutilant qui résulte de l'utilisation d'un trocart nécessaire à la mise en place de sites de ponctions évacuatrices, cette phase d'aspiration pouvant requérir jusqu'à dix applications du trocart.

Par ailleurs, le fluide utilisé est toxique pour le praticien, du fait de sa composition. En effet, en plus du méthanol qui par simple inhalation entraîne des nausées et des troubles de la vue, et éventuellement du phénol, il peut contenir des sels lourds présents dans le formol, comme l'arsenic, le mercure, le plomb et le cadmium. Cet inconvénient est d'autant plus accentué que les quantités de fluides sont grandes ; en moyenne six litres de fluide au moins sont utiles.

Selon la présente invention, on apporte un fluide de conservation qui a une origine naturelle ne présentant aucun danger pour le thanatopracteur, qui peut être employé en quantités beaucoup plus faibles, et qui peut, dans certains cas, éviter d'avoir recours à l'étape d'évacuation des humeurs, à l'aide du trocart.

Ainsi, les premiers objets de l'invention sont d'abord une composition contenant au moins du glycérol, un sel soluble dans le glycérol, et, à titre de principe actif, un hydroalcoolat de propolis, puis un fluide de conservation du corps humain ou animal contenant au moins une telle composition.

La propolis est une substance naturelle récoltée par les abeilles sur les bourgeons notamment de marronniers, saules, peupliers et certains conifères, et recueillie dans les ruches. Ses vertus antiseptiques, anti-inflammatoires et anesthésiantes sont exploitées en thérapeutique et cosmétologie. Son introduction, en faible concentration, dans un fluide de conservation a même été rapportée selon le résumé du brevet russe SU-971 191. Le fluide décrit dans ce document comprend du formol, du glycérol, du phénol, des sels de sodium et potassium, ainsi que des petites quantités d'huile d'olive, de feuilles d'eucalyptus, de propolis et de salpêtre. La propolis y est présente en une concentration variant de 0,35 à 0,40% en poids du poids du fluide, et contribue aux propriétés bactéricide et fongicide du formol.

Telle qu'employée selon l'invention, la propolis constitue le ou un des principes actifs d'un fluide de conservation, pouvant remplacer complètement, à ce titre, le formol et/ou le phénol.

L'hydroalcoolat de propolis est obtenu par extraction de la propolis brute, de préférence à l'éthanol à chaud, par exemple comme décrit dans le document EP-A-0 109 993 et dont la proportion en propolis peut varier de 20 à 60 % et de préférence de 30 à 50 % en poids par rapport au poids de l'hydroalcoolat. Un hydroalcoolat approprié est aussi disponible dans le commerce.

Le fluide de l'invention peut être utilisé seul ou en combinaison avec un fluide traditionnel de conservation. De préférence, il est mis en oeuvre selon l'une quelconque des variantes suivantes :
emploi en combinaison avec un fluide traditionnel à base de formol, en pré-injection avant injection intra-artérielle du fluide formolé, ou en co-injection avec ce dernier ; cette utilisation permet de considérablement réduire les quantités du fluide formolé sans que les propriétés de conservation ne soient altérées ;
emploi seul, par injection intra-artérielle pouvant permettre de s'affranchir de l'application du trocart, ou par injection dans les canules respiratoires et/ou rectales.

On peut aussi prévoir d'utiliser une de ces variantes en association avec une application locale du fluide de l'invention sur le corps en traitement.

Le fluide de l'invention peut en outre incorporer au moins l'un quelconque des constituants suivants :
un agent antiseptique, celui-ci est avantageusement un savon,
un colorant consistant avantageusement en rouge de Bordeaux (Amarante),
des essences végétales notamment choisies parmi les essences de thym et de citronnelle.

Une formulation préférée pour un litre de fluide de l'invention est ci-après indiquée :
600 ml d'hydroalcoolat de propolis,
200 ml de glycérol,
100 ml d'une solution saline,
80 ml d'un savon, et
20 ml de colorant et d'essences végétales.

La solution saline est de préférence une solution aqueuse d'un sel choisi parmi le borate, le sulfate, le nitrate de sodium, de potassium et/ou d'aluminium et leurs mélanges.

Enfin, l'invention concerne l'utilisation d'hydroalcoolat de propolis, et plus particulièrement d'une composition décrite ci-dessus pour la conservation du corps humain ou animal.

Les caractéristiques et avantages d'un fluide de conservation selon l'invention sont illustrés dans les exemples qui suivent. Le fluide retenu pour les exemples 1 à 3 ci-après à la formulation préférentielle ci-dessus

### Exemple 1 :

Le fluide de conservation précité est injecté par voie artérielle dans la dépouille mortelle d'un homme de 57 ans décédé des suites d'un accident cardiovasculaire.

Après injection par les deux artères symétriques, les carotides primitives, distales et médiales, il est procédé à une extériorisation veineuse par sonde en empruntant la veine jugulaire droite.

Un simple dégazage à l'aide d'un trocart intra-abdominal (sans pénétration des viscères digestifs) et un méchage des voies aériennes et digestives permettent de constater qu'au bout de six jours, la conservation du cadavre est parfaitement stable.

### Exemple 2 :

9 heures après son décès, on injecte le fluide de conservation, à l'état pur, dans la dépouille mortelle d'une femme de 84 ans, de corpulence maigre, par voie buccale et par voie anale.

300 ml de fluide sont injectés dans la bouche à l'aide d'une canule artérielle courbe, jusqu'à dégorgement, et 250 ml de fluide sont injectés en éventail sur les organes abdominaux, sans atteindre, ni perforer le diaphragme.

Tout le corps (à l'exception du cuir chevelu) est badigeonné de fluide à l'aide d'un tampon imbibé. On observe immédiatement que le fluide teinte agréablement la peau et notamment celle du visage, ce qui équivaut aux finitions esthétiques classiquement pratiquées.

L'intervention n'a en tout et pour tout duré que 30 minutes. Elle est donc très courte, et au surplus elle ne nécessite pas d'incision, ni d'aspiration cardiaque, et permet donc d'éviter une étape particulièrement pénible.

Les orifices (nez, bouche, anus, vagin) sont soigneusement méchés avec du coton imbibé de fluide.

Observations du corps le matin du jour suivant :
le corps ne dégage aucune odeur cadavérique.

Les tissus de surface restent extrêmement souples et les lèvres sont restées fines.

La peau demeure légèrement et agréablement teintée par le fluide, sans qu'il soit besoin de recourir à une crème maquillante.

Observations du corps aux troisième et quatrième jours :
on ne constate aucun changement de l'aspect visuel du corps, et en particulier, on ne remarque aucune trace de moisissures, aucun écoulement des orifices du visage, ni du bas ventre ; le visage reste hydraté et n'est pas mouillé.

Le corps ne dégage pas d'odeurs ammoniaquée ou de décomposition.

### Exemple 3 :

On prépare une dilution du fluide de conservation précité en mélangeant 800 ml de fluide avec 800 ml d'eau tiède.

La dépouille traitée est celle d'un homme de 50 ans, de corpulence moyenne, décédé d'une tumeur du cerveau avec généralisation.

On injecte dans la carotide, le fluide ainsi dilué, à raison de 1,5 litres vers le coeur et 100 ml vers la tête.

On réalise une ponction intracardiaque.

Les parties thoraco-abdominales sont traitées avec un litre de Visceroseptol® .

24 heures et 48 heures après, l'aspect du corps n'a pas changé et le corps ne dégage pas d'odeur.

Il ressort clairement de ces exemples que le fluide de conservation selon l'invention permet, en terme de résultat de conservation, d'égaler au moins les produits aujourd'hui utilisés, et de rendre l'intervention beaucoup plus simple et aisée, et d'en réduire considérablement la durée.

## Revendications

1. Composition contenant au moins du glycérol et un sel soluble dans le glycérol,
**caractérisée en ce** qu'elle contient, à titre de principe actif, un hydroalcoolat de propolis.

2. Fluide de conservation du corps humain ou animal caractérisé en ce qu'il contient au moins une composition selon la revendication 1.

3. Fluide selon la revendication 2, caractérisé en ce qu'il contient en outre un agent antiseptique.

4. Fluide selon la revendication 3, caractérisé en ce que l'agent antiseptique est un savon.

5. Fluide selon l'une quelconque des revendications 2 à 4, caractérisé en ce qu'il contient en outre un colorant et/ou des essences végétales.

6. Fluide selon la revendication 5, caractérisé en ce que le colorant est le rouge de Bordeaux.

7. Fluide selon la revendication 5, caractérisé en ce que les essences végétales sont choisies parmi les essences de thym et de citronnelle.

8. Fluide selon l'une quelconque des revendications 2 à 7, caractérisé en ce que, pour un litre, il contient 600 ml d'hydroalcoolat de propolis, 200 ml de glycérol, 100 ml d'une solution saline, 80 ml d'un savon et 20 ml de colorant et d'essences végétales.

9. Fluide selon l'une quelconque des revendications 2 à 8, caractérisé en ce que le sel est choisi parmi le borate, le sulfate, le nitrate de sodium, de potassium et/ou d'aluminium et leurs mélanges.

10. Utilisation d'hydroalcoolat de propolis pour la conservation du corps humain ou animal.

11. Utilisation d'une composition selon la revendication 1, en injection intra-artérielle, pour la conservation du corps humain ou animal.
